# FASCICULE DE BREVET EUROPEEN

(11) **EP 1 689 690 B1**
(45) Date de publication et mention de la délivrance du brevet: **05.09.2018**
(21) Numéro de dépôt: 04805856.4
(22) Date de dépôt: 24.11.2004
(51) Int. Cl.: C03C 17/36, B32B 17/10

(54) **SUBSTRAT TRANSPARENT UTILISABLE ALTERNATIVEMENT OU CUMULATIVEMENT POUR LE CONTROLE THERMIQUE, LE BLINDAGE ELECTROMAGNETIQUE ET LE VITRAGE CHAUFFANT.**
TRANSPARENTES SUBSTRAT, DAS ALTERNATIV ODER KUMULATIV ZUR WÄRMEREGULIERUNG, ELEKTROMAGNETISCHEN ABSCHIRMUNG UND BEHEIZTEN VERGLASUNG VERWENDET WERDEN KANN
TRANSPARENT SUBSTRATE WHICH CAN BE USED ALTERNATIVELY OR CUMULATIVELY FOR THERMAL CONTROL, ELECTROMAGNETIC ARMOUR AND HEATED GLAZING

(30) Priorité: 28.11.2003 FR 0313966
(43) Date de publication de la demande: 16.08.2006
(73) Titulaire: SAINT-GOBAIN GLASS FRANCE, 92400 Courbevoie (FR)
(72) Inventeur: FLEURY, Carinne, Saint-Gobain Recherche, 93303 Aubervilleirs (FR); BELLIOT, Sylvain, Saint-Gobain Recherche, 93303 Aubervilleirs (FR); NADAUD, Nicolas, Saint-Gobain Recherche, 93303 Aubervilleirs (FR)
(74) Mandataire: Saint-Gobain Recherche
(86) Numéro de dépôt international: PCT/FR2004/050614
(87) Numéro de publication internationale: WO 2005/051858

(56) Documents cités:
- WO-A-03/037056
- DE-A- 19 751 711
- US-A- 5 595 825
- US-A- 6 007 901
- US-A1- 2002 086 164
- US-B1- 6 353 501
- US-B1- 6 592 996

## Description

La présente invention se rapporte au domaine des vitrages pouvant être utilisés alternativement ou cumulativement dans trois applications particulières : le contrôle thermique (antisolaire et isolation thermique), le blindage électromagnétique et le vitrage chauffant, tout en pouvant, de préférence, subir au moins une opération de transformation impliquant un traitement thermique à une température d'au moins 500°C (il peut notamment s'agir d'une trempe, d'un recuit ou d'un bombage).

Le contrôle thermique est la possibilité d'agir sur le rayonnement solaire et/ou le rayonnement infrarouge de grande longueur d'onde traversant un vitrage séparant un environnement extérieur d'un environnement intérieur, soit pour réfléchir le rayonnement solaire vers l'extérieur (vitrages « antisolaires » ou « de contrôle solaire »), soit pour réfléchir le rayonnement infrarouge de longueur d'onde supérieure à 5 µm vers l'intérieur (isolation thermique avec des vitrages appelés notamment « vitrages bas-émissifs »).

Le blindage électromagnétique est la possibilité d'annihiler, ou pour le moins de réduire, la propagation d'ondes électromagnétiques à travers un vitrage. Cette possibilité est souvent associée avec la possibilité d'agir sur le rayonnement infra-rouge traversant le vitrage. Cette application trouve un intérêt dans le domaine électronique, notamment pour la réalisation de fenêtres de blindage électromagnétique, encore appelées « filtres électromagnétiques », destinées par exemple à être disposées sur la face avant d'un écran de visualisation utilisant la technologie plasma.

Un vitrage chauffant est un vitrage dont la température peut s'élever lorsqu'il est soumis à un courant électrique. Ce type de vitrage trouve des applications dans l'automobile, voire dans le bâtiment, pour la réalisation de vitres qui permettent d'empêcher la formation, ou de supprimer, du givre ou de la buée, ou encore de supprimer la sensation de paroi froide à proximité du vitrage.

La présente invention se rapporte plus particulièrement un substrat transparent, notamment en verre, muni d'un empilement de couches minces comportant une pluralité de couches fonctionnelles, ledit substrat pouvant être utilisé pour réaliser alternativement ou cumulativement du contrôle thermique, du blindage électromagnétique et du vitrage chauffant.

Il est connu de réaliser des empilements de couches minces pour opérer du contrôle thermique, et plus précisément du contrôle solaire, qui soient capables de conserver à la fois leurs propriétés thermiques et leurs propriétés optiques après traitement thermique, en minimisant toute apparition de défauts optiques ; L'enjeu étant alors d'avoir ainsi des empilements de couches minces à performances optiques/thermiques fixes, qu'ils subissent ou non par la suite un ou des traitement(s) thermique(s).

Une première solution a été proposée dans la demande de brevet européen N° EP 718 250. Elle préconise d'utiliser au-dessus de la ou des couches fonctionnelles à base d'argent des couches-barrière à la diffusion de l'oxygène, notamment à base de nitrure de silicium, et de déposer directement les couches d'argent sur le revêtement diélectrique sous-jacent, sans interposition de couches de primage ou de couches métalliques de protection. Cette demande de brevet décrit notamment un empilement du type :

Substrat/Si₃N₄ ou AlN/ZnO/Ag/Nb/ZnO/Si₃N₄

Une seconde solution a été proposée dans la demande de brevet européen N° EP 847 965. Elle repose sur des empilements comprenant deux couches d'argent, et décrit l'utilisation à la fois d'une couche-barrière au-dessus des couches d'argent (comme précédemment) et d'une couche absorbante ou stabilisante, adjacente auxdites couches d'argent et permettant de les stabiliser.

Cette demande de brevet décrit notamment un empilement du type :

Substrat/SnO₂/ZnO/Ag1/Nb/Si₃N₄/ZnO/Ag2/Nb/SnO₂/Si₃N₄

Dans les deux précédentes solutions, on remarque la présence de la couche métallique absorbante de « sur-bloqueur », en niobium en l'occurrence voire en titane, sur les couches d'argent, permettant d'éviter aux couches d'argent le contact avec une atmosphère réactive oxydante ou nitrurante lors du dépôt par pulvérisation réactive respectivement de la couche de SnO₂ ou de la couche de Si₃N₄.

Une troisième solution a depuis été divulguée dans la demande internationale de brevet N° WO 03/01105. Elle propose de déposer la couche métallique absorbante de « bloqueur » non pas sur la (ou chaque) couche fonctionnelle, mais dessous, afin de permettre de stabiliser la couche fonctionnelle pendant le traitement thermique et améliorer la qualité optique de l'empilement après traitement thermique.

Cette demande de brevet décrit notamment un empilement du type :

Substrat/Si₃N₄/ZnO/Ti/Ag1/ZnO/Si₃N₄/ZnO/Ti/Ag2/ZnO/Si₃N₄

Toutefois, dans les plages d'épaisseurs divulguées, un tel empilement n'est pas utilisable pour réaliser un vitrage chauffant ou un vitrage de blindage électromagnétique présentant une esthétique (caractéristiques optiques) acceptable.

L'art antérieur connaît en outre des empilements de couches minces sur substrat qui peuvent être utilisés pour opérer du contrôle thermique et du vitrage chauffant lorsque soumis à un courant électrique. La demande internationale de brevet N° WO 01/14136 divulgue ainsi un empilement bi-couches d'argent supportant un traitement thermique de trempe, qui peut être utilisé pour opérer du contrôle solaire et pour produire de la chaleur lorsque soumis à une courant électrique. Toutefois, la résistivité de cet empilement ne permet pas vraiment de réaliser du blindage électromagnétique efficace car sa résistance par carré R_{□} ne peut être proche et a fortiori inférieure à 1,5 ohm par carré.

De plus, pour l'application vitrage chauffant pour automobile, cette forte résistance par carré oblige à utiliser une batterie présentant une forte tension à ses bornes (de l'ordre de 42 Volts, standard disponible sur le marché) pour pouvoir opérer un chauffage sur toute la hauteur du vitrage. En effet, par application de la formule P(W) = U²/(R_{□}×h²), si R_{□}=1,5 Ohm par carré, pour arriver à P = 600 W/m² (puissance dissipée estimée pour chauffer correctement) et pour obtenir une hauteur de chauffage h > 0,8 mètre, il faut U > 24 Volts.

Il est également connu de réaliser des empilements de couches minces pour opérer du blindage électromagnétique à l'aide d'un substrat doté d'un empilement de protection électromagnétique présentant une bonne protection électromagnétique, et permettant à un utilisateur de visualiser facilement l'affichage des images grâce à une transmittance lumineuse élevée associée à une réflectance faible.

Pour réaliser du blindage électromagnétique, l'art antérieur connaît aussi de la demande internationale de brevet N°WO 01/81262 un empilement notamment du type :

Substrat/Si₃N₄/ZnO/Ag1/Ti/Si₃N₄/ZnO/Ag2/Ti/ZnO/Si₃N₄

Cet empilement peut supporter un traitement thermique de trempe ou de bombage. Toutefois, cet empilement ne permet pas d'obtenir une résistance par carré qui soit de beaucoup inférieure à 1,8 ohm par carré avec des caractéristiques optiques (T_{L}, R_{L}, couleur, ...) jugées acceptables et notamment une réflexion lumineuse dans le visible R_{L}, faible.

Pour réaliser un blindage électromagnétique, l'art antérieur connaît également la demande WO 03/037056 qui définit un empilement avec trois couches d'argent espacées par des couches d'oxydes de métaux, notamment des couches diélectriques. Les empilements à base de couche d'argent sont fabriqués dans des unités de fabrication très complexes.

L'inconvénient majeur de l'art antérieur réside dans le fait qu'il est impératif de procéder à des modifications majeures dans la ligne de production lorsque l'on souhaite utiliser la ligne de production pour fabriquer un empilement de couches minces sur substrat qui n'a pas la (ou les) même(s) application(s) que l'empilement précédemment fabriqué sur cette même ligne.

Cette opération dure en général plusieurs heures à plusieurs jours, est fastidieuse et engendre une perte d'argent très importante car on ne peut produire de vitrages pendant cette période de transition et de mise au point.

En particulier, dès lors que le matériau de la cible diffère d'une produit au suivant, il faut remettre la chambre à la pression atmosphérique avant de changer la cible, puis remettre la chambre sous vide (de l'ordre de 10⁻⁶ bar), ce qui est évidemment long et fastidieux.

Le but de l'invention est alors de pallier ces inconvénients en proposant un substrat muni d'un empilement de couches minces et un procédé de fabrication de ce substrat qui permettent d'obtenir un produit utilisable alternativement ou cumulativement pour réaliser du contrôle thermique et/ou du blindage électromagnétique et/ou du vitrage chauffant.

En particulier, le but de l'invention est de permettre de réaliser toute une gamme de produits sans avoir à ouvrir l'installation de dépôt pour changer de cible, afin de permettre d'économiser le temps nécessaire à la mise à l'atmosphère et surtout à la remise sous vide de l'installation après changement de cible.

La présente invention propose ainsi un empilement particulier, défini en terme de composition des différentes couches et d'épaisseur, qui peut être utilisé pour toutes ces applications à la fois, mais également un type d'empilement, défini en terme de composition des différentes couches, de plages d'épaisseur et/ou de caractéristiques optiques, dans lequel certaines valeurs d'épaisseur permettent de favoriser l'utilisation pour une application donnée. Cet empilement est remarquable en ce qu'il présente une résistance par carré faible (résistance R_{□}< 1,5, voire ≤ 1,3 Ω par carré) tout en conservant sensiblement ses caractéristiques lorsqu'il est soumis à un traitement thermique du type bombage ou trempe.

Ainsi, grâce à ce type d'empilement selon l'invention, pour fabriquer des empilements destinés à une seule ou seulement deux ou les trois application(s) spécifique(s), certain(s) paramètre(s) peu(ven)t être changé(s), tel que l'épaisseur de certaines couches, mais la composition reste globalement identique. Quelques heures suffisent ainsi pour modifier la ligne de production et passer de la fabrication d'un produit ayant une ou plusieurs application(s) préférée(s) à un autre produit ayant une ou plusieurs autre(s) application(s) préférée(s).

La présente invention a ainsi pour objet un substrat transparent, notamment en verre, selon la revendication 1. Ce substrat est muni d'un empilement de couches minces comportant une pluralité de couches fonctionnelles, ledit empilement de couches minces comportant au moins trois couches fonctionnelles à base d'argent, ledit empilement présentant une résistance R_{□} < 1,5, voire ≤ 1,3 Ω par carré et ledit substrat pouvant subir au moins une opération de transformation impliquant un traitement thermique à une température d'au moins 500°C, afin de permettre de réaliser à l'aide du substrat alternativement ou cumulativement du contrôle thermique et/ou du blindage électromagnétique et/ou du vitrage chauffant.

Par « ledit substrat peut subir au moins une opération de transformation impliquant un traitement thermique à une température d'au moins 500°C », on entend le fait que le traitement ne dégrade pas la qualité optique et n'engendre pas l'apparition de piqûres visibles à l'oeil nu et/ou de flou en transmission lors de la réalisation d'un bombage, d'une trempe ou d'un recuit à une température d'au moins 500°C ou supérieure à 500°C.

Par ailleurs, la résistance R_{□} revendiquée est, sauf indication contraire, mesurée avant cet éventuel traitement thermique.

Dans une première application pour la réalisation d'un vitrage automobile, le substrat selon l'invention présente une transmission lumineuse T_{L} ≥ 70 % et une résistance R_{□} < 1,5, voire ≤ 1,3, voire mieux encore ≤ 1,2 Ω par carré.

Dans une deuxième application pour la réalisation d'un vitrage de bâtiment, le substrat transparent selon l'invention présente une transmission lumineuse T_{L} ≥ 40 %, voire ≥ 50 % avec de préférence une réflexion lumineuse dans le visible R_{L} ≤ 10 %, voire ≤ 8 % et lorsqu'il est associé avec au moins un autre substrat pour former un vitrage, ce vitrage présente une sélectivité ≥ 2, voire > 2.

Il est rappelé ici que la sélectivité est définie par le rapport entre la transmission lumineuse (T_{L}) et le facteur solaire (FS), soit par T_{L} / FS, le facteur solaire représentant la somme de la transmission énergétique directe (T_{E}) du vitrage et de l'énergie absorbée par le vitrage et ré-émise vers l'intérieur du bâtiment.

Dans une troisième application pour la réalisation d'un vitrage de blindage électromagnétique, le substrat transparent selon l'invention présente une transmission lumineuse T_{L} ≥ 40 %, voire ≥ 50 %, voire mieux encore ≥ 55 % et une résistance R_{□} ≤ 1,2, voire ≤ 1 Ω par carré.

L'avantage majeur engendré par le fait que le substrat de blindage électromagnétique supporte un traitement thermique du type trempe ou autre est que ainsi, on peut utiliser un substrat plus léger. En outre, les expériences montrent qu'il est toujours plus pratique au niveau industriel d'utiliser un substrat revêtu d'un empilement qui supporte un traitement thermique plutôt que d'utiliser un substrat ayant subi un traitement thermique puis de déposer un empilement dessus.

Le substrat sur lequel est déposé l'empilement est, de préférence, en verre.

D'une manière habituelle, dans le cadre de la présente invention, l'empilement étant déposé sur le substrat, ce substrat réalise un niveau 0 et les couches déposées dessus réalisent des niveaux au-dessus que l'on peut numéroter dans un ordre croissant avec des nombres entiers pour les distinguer. Dans le présent document, la numérotation est uniquement utilisée pour distinguer les couches fonctionnelles et leur ordre de dépôt.

Par couche « supérieure » ou couche « inférieure », on entend une couche qui n'est pas forcément déposée respectivement strictement au-dessus ou en dessous de la couche fonctionnelle lors de la réalisation de l'empilement, une ou plusieurs couches pouvant être intercalées. Chaque couche fonctionnelle étant associée avec une ou plusieurs couche(s) déposée(s) en dessous ou au-dessus de la couche fonctionnelle dont la présence dans l'empilement se justifie par rapport à cette couche fonctionnelle, on peut dire que l'association couche fonctionnelle avec sa (ou ses) couche(s) sous-jacente(s) et/ou sus-jacente(s) réalise « un motif ».

Selon une variante de l'invention, le substrat comporte au moins quatre couches fonctionnelles à base d'argent.

L'épaisseur totale des couches fonctionnelles à base d'argent est, de préférence, supérieure ou égale à 25 nm. Cette épaisseur totale est, de préférence, comprise sensiblement entre 35 et 50 nm lorsque l'empilement comprend trois couches fonctionnelles et sensiblement entre 28 et 64 nm lorsque l'empilement comprend au moins quatre couches fonctionnelles. Dans une variante, la somme des épaisseurs des couches d'argent est inférieure à 54 nm.

Selon l'invention, le substrat comporte au moins trois motifs identiques de couches fonctionnelles, chaque couche fonctionnelle étant associée dans chaque motif fonctionnel à au moins une couche sous-jacente et/ou sus-jacente.

Selon une autre variante de l'invention, au moins une couche fonctionnelle, et de préférence chaque couche fonctionnelle, est située entre au moins une couche diélectrique inférieure et une couche diélectrique supérieure, lesdites couches diélectriques étant, de préférence, à base de ZnO, éventuellement dopé à l'aluminium.

Selon une variante de l'invention, au moins une couche fonctionnelle, et de préférence chaque couche fonctionnelle, comporte une couche supérieure à base de Si₃N₄ AlN ou à base d'un mélange des deux.

Selon une variante de l'invention, le substrat est directement revêtu d'une couche à base de Si₃N₄, AlN ou à base d'un mélange des deux.

Selon une variante de l'invention, dans un motif fonctionnel au moins, et de préférence dans chaque motif fonctionnel, une couche métallique absorbante supérieure (appelée « sur-bloqueur »), de préférence à base de Ti, est située entre la couche fonctionnelle à base d'argent et au moins une couche diélectrique supérieure.

La couche métallique absorbante supérieure peut également être constituée d'un métal ou d'un alliage à base de nickel, chrome, niobium, zirconium, tantale, ou aluminium.

Selon l'invention chaque motif fonctionnel présente la structure suivante : ZnO/Ag/...ZnO/Si₃N₄ et de préférence la structure suivante : ZnO/Ag/Ti/ZnO/Si₃N₄.

Les épaisseurs des couches constitutives dudit motif pour l'empilement tri-couches sont, de préférence :
ZnO / Ag /...ZnO / Si₃N₄ et de préférence : ZnO/Ag/Ti/ZnO/Si₃N₄
5 à 15/10 à 17/...5 à 15/25 à 65 nm... 5 à 15/10 à 17/0,2 à 3/5 à 15/25 à 65 nm
ou 7 à 15/10 à 17/...7 à 15/25 à 65 nm... 7 à 15/10 à 17/0,2 à 2/7 à 15/25 à 65 nm.

Les épaisseurs des couches constitutives dudit motif pour l'empilement quadri-couches sont, de préférence :
ZnO / Ag /...ZnO / Si₃N₄ et de préférence : ZnO/Ag/Ti/ZnO/Si₃N₄
5 à 15/7 à 15/...5 à 15/23 à 65 nm... 5 à 15/7 à 15/0,2 à 3/5 à 15/23 à 65 nm
ou 7 à 15/7 à 15/...7 à 15/23 à 65, nm... 7 à 15/7 à 15/0,2 à 2/7 à 15/23 à 65 nm.

L'invention a également pour objet un procédé de fabrication d'un substrat transparent, notamment en verre, selon la revendication 13. Selon ce procédé, le substrat est muni d'un empilement de couches minces comportant une pluralité de couches fonctionnelles, au moins trois couches fonctionnelles à base d'argent sont déposées sur ledit substrat, ledit empilement présente une résistance R_{□} < 1,5, voire ≤ 1,3 Ω par carré et ledit substrat peut subir au moins une opération de transformation impliquant un traitement thermique à une température d'au moins 500°C, afin de permettre de réaliser alternativement ou cumulativement à l'aide du substrat du contrôle thermique et/ou du blindage électromagnétique et/ou du vitrage chauffant.

Selon une variante de l'invention, au moins quatre couches fonctionnelles à base d'argent sont déposées sur ledit substrat.

L'épaisseur totale des couches fonctionnelles à base d'argent déposées est, de préférence, supérieure ou égale à 25 nm. Cette épaisseur totale est, de préférence, comprise sensiblement entre 35 et 50 nm lorsque l'empilement comprend trois couches fonctionnelles et sensiblement entre 28 et 64 nm lorsque l'empilement comprend au moins quatre couches fonctionnelles.

Selon une variante de l'invention, au moins trois motifs identiques de couches fonctionnelles sont déposés sur ledit substrat, chaque couche fonctionnelle étant associée dans chaque motif fonctionnel à au moins une couche sous-jacente et/ou sus-jacente.

Selon une variante de l'invention, pour au moins une couche fonctionnelle, et de préférence chaque couche fonctionnelle, au moins une couche diélectrique inférieure est déposée sous ladite couche fonctionnelle et une couche diélectrique supérieure est déposée sur ladite couche fonctionnelle, lesdites couches diélectriques étant, de préférence, à base de ZnO, éventuellement dopé à l'aluminium.

Selon une variante de l'invention, une couche supérieure à base de Si₃N₄, AlN ou à base d'un mélange des deux est déposée au-dessus d'au moins une couche fonctionnelle, et de préférence au-dessus de chaque couche fonctionnelle.

Selon une variante de l'invention, ledit substrat est directement revêtu d'une couche à base de Si₃N₄, AlN ou à base d'un mélange des deux, déposée préalablement au dépôt de toutes les autres couches.

Selon une variante de l'invention, dans un motif fonctionnel au moins, et de préférence dans chaque motif fonctionnel, une couche métallique absorbante supérieure, de préférence à base de Ti, est déposée au-dessus de la couche fonctionnelle à base d'argent et au-dessous d'au moins une couche diélectrique supérieure.

Selon l'invention chaque motif fonctionnel, déposé présente la structure suivante : ZnO/Ag/...ZnO/Si₃N₄ et de préférence la structure suivante : ZnO/Ag/Ti/ZnO/Si₃N₄.

Selon cette variante de l'invention, les épaisseurs des couches déposées constitutives dudit motif pour l'empilement tri-couches sont, de préférence :
ZnO/Ag /...ZnO / Si₃N₄ et de préférence : ZnO/Ag/Ti/ZnO/Si₃N₄
5 à 15/10 à 17/...5 à 15/25 à 65 nm... 5 à 15/10 à 17/0,2 à 3/5 à 15/25 à 65 nm
ou 7 à 15/10 à 17/...7 à 15/25 à 65 nm... 7 à 15/10 à 17/0,2 à 2/7 à 15/25 à 65 nm.

Selon cette variante de l'invention également, les épaisseurs des couches déposées constitutives dudit motif pour l'empilement quadri-couches sont, de préférence :
ZnO / Ag /...ZnO / Si₃N₄ et de préférence : ZnO/Ag/Ti/ZnO/Si₃N₄
5 à 15/7 à 15/...5 à 15/23 à 65 nm... 5 à 15/7 à 15/0,2 à 3/5 à 15/23 à 65 nm
ou 7 à 15/7 à 15/...7 à 15/23 à 65 nm... 7 à 15/7 à 15/0,2 à 2/7 à 15/23 à 65 nm.

Selon une variante de l'invention, le dépôt des motifs fonctionnels est opéré en passant plusieurs fois ledit substrat dans un dispositif unique de fabrication.

Selon cette variante de l'invention, lorsque ledit empilement comporte quatre couches fonctionnelles à base d'argent, le dépôt des motifs est, de préférence, opéré par paire en passant deux fois ledit substrat dans un dispositif unique de fabrication, selon des conditions de dépôt sensiblement identiques pour les deux passages et de préférence, en conservant le substrat dans le vide entre les deux passages.

Selon cette variante de l'invention également, les épaisseurs des couches déposées sont, de préférence, sensiblement identiques lors de chacun des deux passages.

Par ailleurs, lorsque le substrat selon l'invention subit une opération de transformation impliquant un traitement thermique à une température d'au moins 500°C sa résistance R_{□} est, de préférence, diminuée d'au moins 10%, voire d'au moins 15 %.

L'invention a également pour objet un vitrage de contrôle thermique et/ou de blindage électromagnétique et/ou chauffant incorporant au moins un substrat selon l'invention.

L'invention a également pour objet l'utilisation du substrat selon l'invention pour réaliser alternativement ou cumulativement du contrôle thermique et/ou du blindage électromagnétique et/ou du vitrage chauffant.

Avantageusement, les économies réalisées par la mise en oeuvre du procédé selon l'invention lors de la réalisation d'empilement selon l'invention sont énormes, car il n'est plus nécessaire d'arrêter la ligne de production pendant de longues journées ou au moins de longues heures lorsque l'on veut produire des empilements ayant une (ou plusieurs) application(s) différente(s). Quelques heures suffisent pour modifier les paramètres de production sur la ligne et obtenir un produit commercialisable ayant l'(ou les) application(s) souhaitée(s).

Avantageusement également, le substrat selon l'invention peut être utilisé pour réaliser des vitrages monolithiques, double ou triple vitrages, vitrages feuilletés, pour réaliser alternativement ou cumulativement du contrôle thermique et/ou du blindage électromagnétique et/ou du vitrage chauffant.

Ainsi, pour l'application automobile, il est possible de réaliser un vitrage feuilleté incorporant un substrat selon l'invention, ce vitrage réalisant à la fois :
- du contrôle thermique (et plus précisément du contrôle solaire pour réfléchir vers l'extérieur du véhicule le rayonnement solaire),
- du blindage électromagnétique pour protéger l'intérieur du véhicule du rayonnement électromagnétique extérieur et.
- du vitrage chauffant permettant de faire fondre du givre ou de vaporiser de la buée.

De même, pour l'application bâtiment, il est possible de réaliser un double vitrage incorporant un substrat selon l'invention, ce vitrage réalisant à la fois,
- du contrôle thermique (du contrôle solaire pour réfléchir vers l'extérieur de la pièce équipée du vitrage le rayonnement solaire et/ou de l'isolation thermique pour réfléchir vers l'intérieur de la pièce équipée du vitrage le rayonnement interne) :
- du blindage électromagnétique pour protéger l'intérieur de la pièce équipée du vitrage du rayonnement électromagnétique extérieur, et
- du vitrage chauffant permettant de désembuer ou d'empêcher la formation de buée et d'empêcher la sensation de « paroi froide » à proximité du vitrage.

Avantageusement, ces vitrages incorporant un substrat selon l'invention présentent des couleurs en réflexion et en transmission esthétiquement acceptables.

La présente invention sera mieux comprise à la lecture de la description détaillée ci-après d'exemples de réalisation non limitatifs et des figures ci-jointes :
- La figure 1 illustre les valeurs de taux de réflexion lumineuse vers l'extérieur des exemples 11 et 13 en fonction de la longueur d'onde λ ;
- La figure 2 illustre les taux de transmission lumineuse, respectivement, de l'exemple 21 selon l'invention et de l'exemple comparatif 22 en fonction de la longueur d'onde λ, ainsi que la courbe de Parry-Moon de densité d'énergie solaire D en fonction de la longueur d'onde λ ;
- La figure 3 illustre les taux de transmission lumineuse, respectivement, de l'exemple 21 selon l'invention et de l'exemple comparatif 22 en fonction de la longueur d'onde λ, ainsi que la sensibilité de l'oeil humain Y sur une échelle H normalisée ;
- La figure 4 illustre les taux de transmission lumineuse, respectivement, des exemples 23 et 24 selon l'invention et de l'exemple comparatif 25 en fonction de la longueur d'onde λ, ainsi que la courbe de Parry-Moon de densité d'énergie solaire D en fonction de la longueur d'onde λ ; et
- La figure 5 illustre un schéma d'assemblage d'un vitrage de blindage électromagnétique mettant en oeuvre le substrat selon l'invention.

### 1- Exemples d'empilements pour des vitrages chauffant et plus particulièrement pour des pare-brise alimentés en 12 V

La puissance dissipée pour chauffer correctement est estimée généralement à 600 W/m².

Or P(W) = U²/(R_{□}×h²). Si U=12V, il faut R_{□} = 1 Ohm par carré pour h = 50 cm ; h correspondant à la hauteur de la « fenêtre » dans laquelle est réalisé le chauffage afin d'empêcher la formation de buée et/ou de givre (en pratique, la tension U est de 12 à 14 V, ce qui correspond à la tension aux bornes des batteries de la majorité des véhicules de locomotion actuellement produits ; toutefois, cette tension pourrait être comprise entre 12 et 24 V).

Pour l'application automobile, un empilement présentant les caractéristiques suivantes (en feuilleté) peut être jugé satisfaisant :
- R_{□} ≤ 1,2 Ohm par carré ;
- Bonne qualité (pas de défauts perceptibles à l'oeil nu) après bombage ;
- T_{L} ≥ 70% et R_{L} limitée ;
- Couleur en réflexion jugée esthétique (de préférence a* ≤ 0 et b* ≤ 0) ;
- durabilités mécanique et chimique satisfaisantes.

Les solutions à deux couches d'argent encapsulées dans des diélectriques ne permettent pas d'obtenir à la fois une T_{L} ≥ 70 %, une résistance R_{□} ≤ 1,2 Ω par carré et une couleur acceptable.

Pour parvenir au résultat souhaité, il apparaît préférable :
- de positionner l'empilement de couches comportant les couches fonctionnelles en face 3 (la face 1 étant la face la plus à l'extérieur du véhicule et la face 4 étant la face la plus à l'intérieur) ; et
- de déposer plus de deux couches d'argent eu égard à l'épaisseur totale des couches d'argent nécessaire.

Des exemples de constitution d'empilements selon l'invention sont donnés ci-après avec des empilements à trois couches fonctionnelles (exemples 11, 12 et 14) et à quatre couches fonctionnelles (exemples 15 et 16), les résultats ayant été mesurés après une opération de trempe à 620 °C pendant environ 8 min.

### Exemple 11 selon l'invention, tri-couches :

| Couches | Si₃N₄ | ZnO | Ag1 | ZnO | Si₃N₄ | ZnO | Ag2 | ZnO | Si₃N₄ | ZnO | Ag3 | ZnO | Si₃N₄ |
|---|---|---|---|---|---|---|---|---|---|---|---|---|---|
| Epaisseur (nm) | 37 | 7 | 12,5 | 8 | 49 | 7 | 12,5 | 8 | 53 | 7 | 12,5 | 8 | 29 |

extérieur/verre (2,1mm)/PVB (0,76mm)/Ag3/Ag2/Ag1/verre (1,6mm)/habitacle

Exemple 12 selon l'invention, tri-couches : Même empilement que l'exemple 11 avec en outre un sur-bloqueur en titane au-dessus de chaque couche fonctionnelle (épaisseur de l'ordre de 0,5 nm à 1 nm)

### Exemple 13, exemple comparatif bi-couches :

| Couches | Si₃N₄ | ZnO | Ag1 | ZnO | Si₃N₄ | ZnO | Ag2 | ZnO | Si₃N₄ |
|---|---|---|---|---|---|---|---|---|---|
| Epaisseur (nm) | 24 | 8 | 8 | 6 | 70 | 8 | 7 | 6 | 26 |

extérieur/verre (2,1mm)/PVB (0,76mm)/Ag3/Ag2/Ag1/verre (1,6mm)/habitacle avec en outre un sous-bloqueur en titane au-dessous de chaque couche fonctionnelle (épaisseur de l'ordre de 0,5 nm à 1 nm)

### Exemple 14 selon l'invention, tri-couches :

| Couches | Si₃N₄ | ZnO | Ag1 | ZnO | Si₃N₄ | ZnO | Ag2 | ZnO | Si₃N₄ | ZnO | Ag3 | ZnO | Si₃N₄ |
|---|---|---|---|---|---|---|---|---|---|---|---|---|---|
| Epaisseur (nm) | 37 | 7 | 12,5 | 8 | 52 | 7 | 13,5 | 8 | 52 | 7 | 14 | 8 | 31 |

extérieur/verre (2,1mm)/PVB (0,76mm)/Ag3/Ag2/Ag1/verre (1,6mm)/habitacle

### Caractéristiques techniques des vitrages feuilletés mesurées :

| Exemple | R_{□} (Ohm/□) | T_{L}(%) | T_{E}(%) | R_{L}(%) ext. | a*(Rext) | b*(Rext) | R_{E}(%) |
|---|---|---|---|---|---|---|---|
| 11 | 1,09 | 70,4 | 30,4 | 12,1 | -10,9 | 11,7 | 46,0 |
| 12 | 1,00 | 70,1 | 30,8 | 14,2 | -9,3 | 7,9 | 46,1 |
| 13 | 4,60 | 76,1 | 46,1 | 17,8 | -4,8 | -1,9 | 29,8 |
| 14 | 1,00 | 70,5 | 31,4 | 11,5 | -7,5 | 2,7 | 44,8 |

### Exemple 15 selon l'invention, quadri-couches :

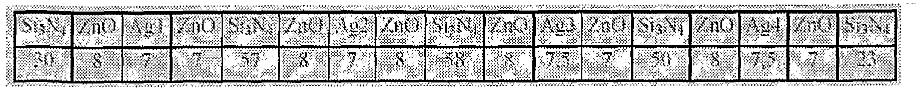

extérieur/verre (2,1mm)/PVB (0,76mm)/Ag3/Ag2/Ag1/verre (1,6mm)/habitacle

### Exemple 16 selon l'invention, quadri-couches :

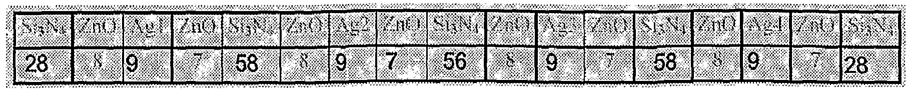

extérieur/verre (2,1mm)/PVB (0,76mm)/Ag3/Ag2/Ag1/verre (1,6mm)/habitacle

Cet exemple 16 est obtenu par double passage du substrat dans une unité de dépôt d'un empilement à deux couches d'argent.

### Caractéristiques techniques des vitrages feuilletés mesurées :

| Exemple | R_{□} (Ohm/□) | T_{L}(%) | T_{E}(%) | R_{L}(%) ext. | a*(Rext) | b*(Rext) | R_{E}(%) |
|---|---|---|---|---|---|---|---|
| 15 | 1,4 | 70,1 | 38,9 | 11,3 | 6,1 | -9,9 | 31,8 |
| 16 | 1,03 | 70,3 | 31,7 | 8,3 | -1,8 | -2,5 | 40,4 |

La résistivité des empilements, calculée à partir de la résistance par carrée mesurée sans contact à l'aide d'un dispositif Nagy est de l'ordre de 4,2.10⁻⁶ Ohm.cm pour les exemples tri-couches selon l'invention 11 et 12, alors qu'elle est de l'ordre de 7.10⁻⁶ Ohm.cm pour l'exemple bi-couches comparatif 13.

Les exemples selon l'invention 11, 12, 14, 15 et 16 sont relativement stables en terme de T_{L}, R_{L} et couleur.

Les valeurs de réflexion énergétique sont très élevées, ce qui était attendu au regard de l'épaisseur cumulée d'argent (3×12,75 nm). Une excellente sélectivité (T_{L}/FS proche, voire supérieure à 2 pour un échantillon feuilleté) a été obtenue.

La résistivité des couches d'argent inclues dans les empilements tri-couches comportant des couches d'argent présentant une épaisseur d'environ 13 nm est étonnamment basse par rapport aux valeurs obtenues avec un empilement bi-couches comportant des couches d'argent présentant une épaisseur d'environ 8 à 9 nm.

La qualité optique des quatre exemples selon l'invention après bombage est satisfaisante : il n'y a pas de flou ni de piqûres de corrosion observable dans les conditions habituelles.

La durabilité chimique et mécanique de ces empilements selon l'invention est également très bonne.

### 2- Exemples d'empilements pour des vitrages de contrôle thermique, particulièrement de contrôle solaire pour le bâtiment

Les performances d'un produit de contrôle solaire sont évaluées à partir du critère de « sélectivité », c'est à dire le rapport entre la transmission lumineuse du vitrage (T_{L}) et le pourcentage d'énergie solaire pénétrant à l'intérieur du bâtiment (Facteur Solaire - F.S.). Afin d'obtenir la plus importante sélectivité possible, tout en gardant un bon niveau de transmission lumineuse (nécessaire pour le confort des occupants des locaux), il est important de chercher à obtenir un vitrage qui assurera une coupure en transmission aussi abrupte que possible entre le domaine visible et le domaine infrarouge et ainsi éviter la transmission de l'énergie contenue dans cette partie du spectre (courbe Parry-Moon ; PM). Le spectre idéal d'un vitrage de contrôle solaire est donc une fonction créneau assurant la transmission dans le visible et coupant totalement dans l'infrarouge.

La définition d'empilements tri-couches et quadri-couches d'argent selon l'invention permet d'augmenter cette sélectivité. En effet, pour des épaisseurs d'argent et de diélectrique bien choisies, le spectre en transmission d'un vitrage comportant ce type d'empilement se rapproche d'une fonction créneau et permet donc, à niveau de transmission égal, d'augmenter sensiblement la sélectivité. Ceci peut être obtenu sans perdre la neutralité en couleur des vitrages, aussi bien en transmission qu'en réflexion.

Des exemples de constitution d'empilements sont donnés ci-après avec des empilements à trois couches fonctionnelles (exemples 21 et 23) et à quatre couches fonctionnelles (exemple 24), comparés avec des empilements à deux couches fonctionnelles (exemples 22 et 25), respectivement pour obtenir un niveau transmission de 50 % (exemples 21 et 22), et un niveau transmission de 60 % (exemples 23 à 25) et une sélectivité optimisée.

Tous ces exemples ont été réalisés selon le schéma suivant :
extérieur/verre (6 mm)/empilement/espace(15 mm)/verre (6 mm)/intérieur,
avec un espace rempli d'argon à 90 % et 10 % d'air sec et les résultats donnés ci-après ont été mesurés après une opération de trempe à 620 °C pendant environ 8 min.

### Exemples 21 tri-couches selon l'invention et 22 bi-couches comparatif présentant chacun une transmission lumineuse de 50 % (épaisseurs des couches en nm):

| Ex | Verre | Si₃N₄ | ZnO | Ag1 | ZnO | Si₃N₄ | ZnO | Ag2 | ZnO | Si₃N₄ | ZnO | Ag3 | ZnO | Si₃N₄ |
|---|---|---|---|---|---|---|---|---|---|---|---|---|---|---|
| 21 | 6 mm | 35 | 10 | 16,2 | 10 | 55 | 10 | 16,2 | 10 | 55 | 10 | 16,2 | 10 | 33 |
| 22 | 6 mm | 26 | 10 | 9,2 | 10 | 63 | 10 | 19 | 10 | 20 | | | | |

Une couche de sur-bloqueur en Ti d'environ 1 nm d'épaisseur a en outre été positionnée juste au-dessus de chaque couche fonctionnelle.

### Caractéristiques techniques mesurées :

| | T_{L} (%) | λ_{d} (nm) | pₑ (%) | Rᵢₙₜ (%) | Lᵢₙₜ* | aᵢₙₜ* | bᵢₙₜ* | Rₑₓₜ (%) | Lₑₓₜ* | aₑₓₜ* | bₑₓₜ* | T_{E} (P.M. masse2) | T_{L}/T_{E} |
|---|---|---|---|---|---|---|---|---|---|---|---|---|---|
| Ex.21 | 50,2 | 501 | 6,6 | 12,7 | 42,3 | -3,4 | -3,1 | 13,8 | 43,9 | -1,0 | -1,3 | 20,0 | 2,51 |
| Ex.22 | 49,3 | 514 | 3,3 | 23,0 | 55,1 | 0,7 | 5,9 | 19,2 | 50,9 | -3,1 | -9,2 | 24,2 | 2,04 |

La couleur dominante exprimée par λ_{d} et la pureté exprimée par pₑ sont mesurées ici en transmission.

### Exemples 23 tri-couches selon l'invention, 24 quadri-couches selon l'invention et 25 bi-couches comparatif présentant chacun une transmission lumineuse de 60 % (épaisseurs des couches en nm):

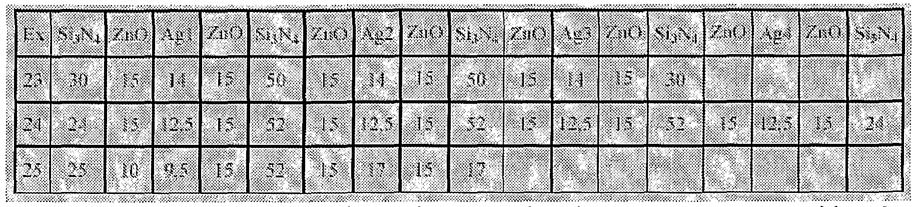

Une couche de sur-bloqueur en Ti d'environ 1 nm d'épaisseur a en outre été positionnée juste sur chaque couche fonctionnelle.

### Caractéristiques techniques mesurées :

| | T_{L} (%) | λ_{d} (nm) | pₑ (%) | Rᵢₙₜ (%) | Lᵢₙₜ* | aᵢₙₜ* | bᵢₙₜ* | Rₑₓₜ (%) | Lₑₓₜ* | aₑₓₜ* | bₑₓₜ* | T_{E} (P.M. masse2) | T_{L}/T_{E} |
|---|---|---|---|---|---|---|---|---|---|---|---|---|---|
| 23 | 57,0 | 541 | 3,5 | 12,3 | 41,7 | -0,9 | -8,6 | 12,7 | 42,3 | -2,6 | -8,7 | 25,2 | 2,26 |
| 24 | 58,0 | 537 | 2,9 | 12,6 | 42,2 | -6,6 | 0,7 | 12,2 | 41,5 | -4,5 | -1,7 | 24,8 | 2,34 |
| 25 | 60,1 | 515 | 3,2 | 19,0 | 50,7 | 2,1 | 1,3 | 15,7 | 46,6 | -2,2 | -9,8 | 29,5 | 2,04 |

Comme précédemment, la couleur dominante exprimée par λ_{d} et la pureté exprimée par pₑ sont mesurées ici en transmission.

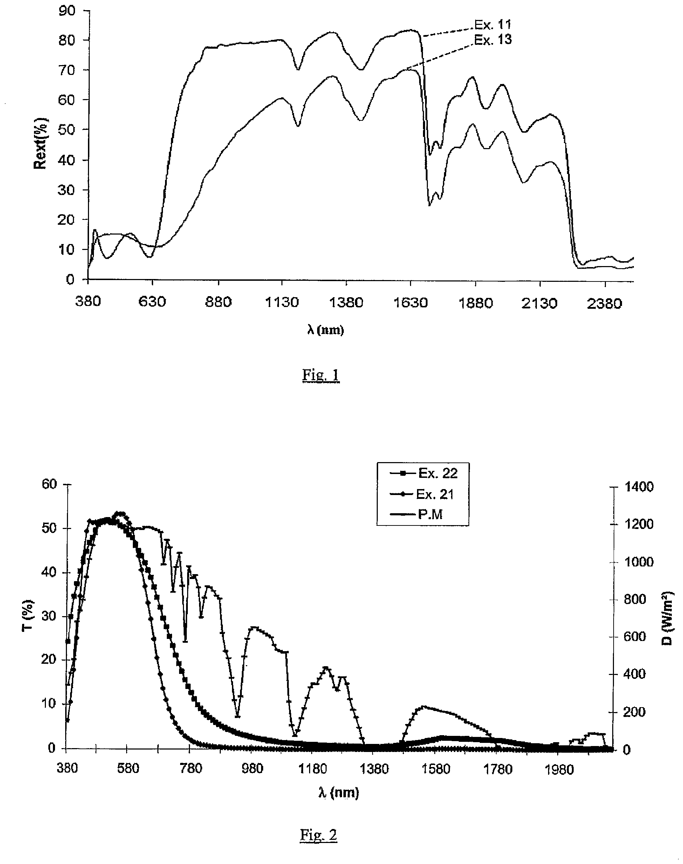

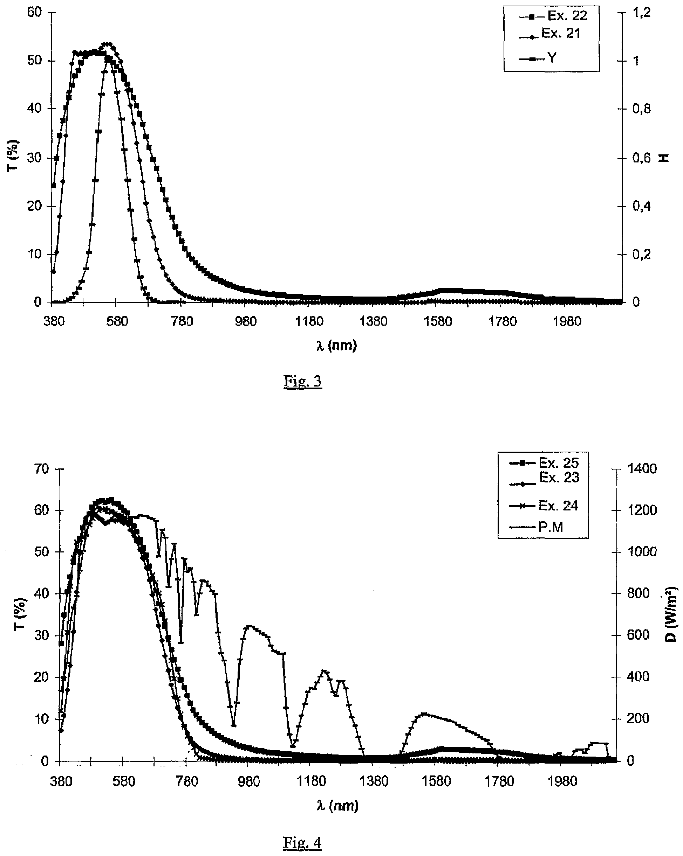

La comparaison des spectres des exemples selon l'invention 21, 23 et 24 avec les exemples comparatifs 22 et 25 sur l'ensemble du spectre solaire, illustrée figures 2 à 4, montre bien que les empilements tri-couches permettent de se rapprocher de la fonction créneau (pente très abrupte de la chute de transmission vers 780 nm (fin du domaine visible, début du domaine infrarouge). Il en va de même pour les empilements quadri-couches. Par ailleurs, cette augmentation de la sélectivité n'est pas obtenue au détriment de la colorimétrie du vitrage, la couleur en réflexion extérieure du vitrage étant neutre (dans le système L*a*b*) a* et b* étant négatifs et de faible valeur absolue. De plus, la couleur en transmission n'a pas une plus grande pureté, ce qui permet aux occupants des locaux d'apprécier l'environnement extérieur en vraies couleurs. Ce dernier point est observable sur la figure 3 montrant la superposition des spectres des exemples 21 et 22 et de la sensibilité de l'oeil humain. En effet, ce graphique montre que le filtre optique réalisé à l'aide de l'empilement de couches minces de l'exemple 21 est plus large, en terme de longueur d'onde, que la distribution de la sensibilité de l'oeil humain.

### 3- Exemples d'empilements pour des vitrages de blindage électromagnétique et plus particulièrement pour des écrans plasma

La structure de l'empilement réalisé pour vérifier l'intérêt de l'invention pour le blindage électromagnétique est la suivante :
substrat en verre clair (2mm)/empilement de couches minces présentant au moins trois couches fonctionnelles.

La trempe réalisée préalablement aux mesure a été provoquée par un recuit du substrat muni de l'empilement à une température d'environ 620 °C pendant 5 min.

### Exemple 31 selon l'invention, quadri-couches :

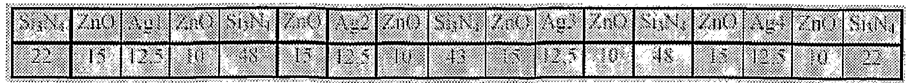

avec en outre un sur-bloqueur en titane au-dessus de chaque couche fonctionnelle (épaisseur de l'ordre de 0,5 nm à 1nm)

### Exemple 32 selon l'invention, quadri-couches :

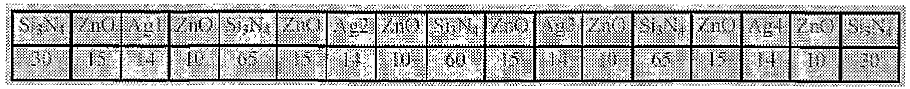

avec en outre un sur-bloqueur en titane au-dessus de chaque couche fonctionnelle (épaisseur de l'ordre de 0,5 nm à 1 nm)

### Exemple 33 selon l'invention, quadri-couches :

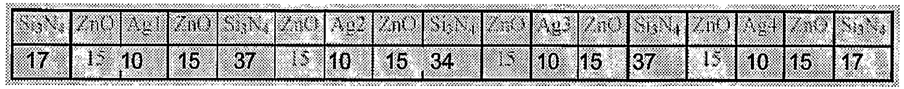

avec en outre un sur-bloqueur en titane au-dessus de chaque couche fonctionnelle (épaisseur de l'ordre de 0,5 nm à 1 nm)

Caractéristiques techniques mesurées après recuit :

| Exemple | R_{□} (Ohm/□) | résistivité (10⁻⁶ Ω.cm) | T_{L}(%) | R_{L}(%) | λ_{d} (nm) | pₑ (%) |
|---|---|---|---|---|---|---|
| 31 | 0,9 | 4,5 | 72 | 6 | 490 | 9 |
| 32 | 0,7 | 3,9 | 70 | 10 | 450 | 5 |
| 33 | 1,2 | 4,8 | 72 | 7 | 520 | 5 |

La couleur dominante exprimée par λ_{d} et la pureté exprimée par pₑ sont mesurées ici en réflexion.

Il apparaît que la trempe entraîne une baisse de la résistivité de l'argent et entraîne une modification très limitée des propriétés optiques de l'empilement. En effet, pour l'exemple 31, la résistance de cet empilement avant recuit était R_{□} =1,1Ω/□ (pour une résistivité de 5,5.10⁻⁶ Ohm.cm) soit une diminution d'environ 18 %, pour l'exemple 32, la résistance de cet empilement avant recuit était R_{□}=0,9Ω/□ (pour une résistivité de 5,0.10⁻⁶ Ohm.cm) soit une diminution d'environ 22 % et pour l'exemple 33, la résistance de cet empilement avant recuit était R_{□}=1,5Ω/□ soit une diminution d'environ 20 %. Toutefois, la trempe n'entraîne pas de modification majeure de la couleur.

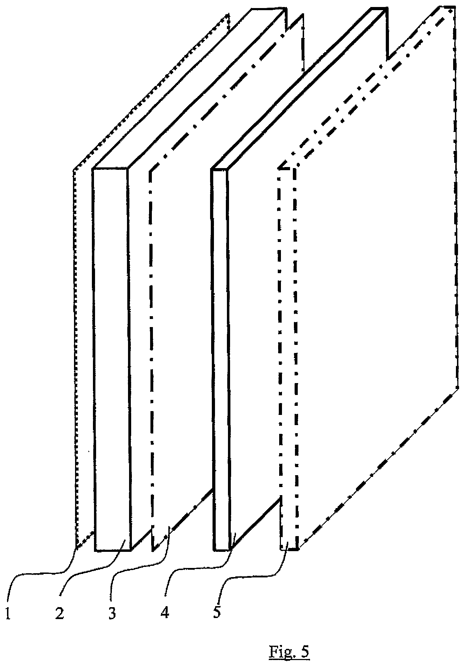

L'empilement selon l'invention peut être utilisé dans un assemblage présentant par exemple la structure illustrée figure 5, afin de réaliser un filtre électromagnétique pour un écran utilisant la technologie plasma. Cet assemblage comporte :
1- Une couche anti-reflet optionnelle ;
2- Un substrat en verre clair, qui pourrait également être teinté ;
3- Un empilement de couches minces présentant au moins trois couches fonctionnelles ;
4- Une feuille de matière plastique en PVB, qui pourrait également être en PSA optionnelle ;
5- Un film PET optionnel.

L'empilement de couches minces est ainsi positionné en face deux de l'assemblage.

Le substrat recevant l'empilement peut être trempé après le dépôt de l'empilement.

La présente invention est décrite dans ce qui précède à titre d'exemple. Il est entendu que l'homme du métier est à même de réaliser différentes variantes de l'invention sans pour autant sortir du cadre du brevet tel que défini par les revendications.

## Revendications

1. Substrat transparent, notamment en verre, muni d'un empilement de couches minces comportant une pluralité de couches fonctionnelles, **caractérisé en ce que** ledit empilement de couches minces comporte au moins trois couches fonctionnelles à base d'argent et comporte au moins trois motifs identiques de couches fonctionnelles, chaque couche fonctionnelle étant associée dans chaque motif fonctionnel à au moins une couche sous-jacente et/ou sus-jacente, chaque motif fonctionnel présentant la structure suivante: ZnO/Ag/...ZnO/Si₃N₄, **en ce que** ledit empilement présente une résistance R_{□} < 1,5 Ω par carré **et en ce que** ledit substrat peut subir au moins une opération de transformation impliquant un traitement thermique à une température d'au moins 500°C.

2. Substrat transparent selon la revendication 1, **caractérisé en ce qu'**il présente une transmission lumineuse T_{L} ≥ 70 %.

3. Substrat transparent selon la revendication 1, **caractérisé en ce qu'**il présente une transmission lumineuse T_{L} ≥ 40 % **et en ce que** lorsqu'il est associé avec au moins un autre substrat pour former un vitrage, ce vitrage présente une sélectivité ≥ 2.

4. Substrat transparent selon la revendication 1, **caractérisé en ce qu'**il présente une transmission lumineuse T_{L} ≥ 40 % et une résistance R_{□} ≤ 1,1 Ω par carré.

5. Substrat transparent selon l'une quelconque des revendications précédentes, **caractérisé en ce qu'il** comporte au moins quatre couches fonctionnelles à base d'argent.

6. Substrat transparent selon l'une quelconque des revendications précédentes, **caractérisé en ce que** l'épaisseur totale des couches fonctionnelles à base d'argent est supérieure ou égale à 25 nm et est de préférence comprise entre 35 et 50 nm lorsque l'empilement comprend trois couches fonctionnelles et entre 28 et 64 nm lorsque l'empilement comprend au moins quatre couches fonctionnelles.

7. Substrat transparent selon l'une quelconque des revendications précédentes, **caractérisé en ce qu'**au moins une couche fonctionnelle, et de préférence chaque couche fonctionnelle, est située entre au moins une couche diélectrique inférieure et une couche diélectrique supérieure, lesdites couches diélectriques étant, de préférence, à base de ZnO, éventuellement dopé à l'aluminium.

8. Substrat transparent selon l'une quelconque des revendications précédentes, **caractérisé en ce qu'**au moins une couche fonctionnelle, et de préférence chaque couche fonctionnelle, comporte une couche supérieure à base de Si₃N₄, AlN ou à base d'un mélange des deux.

9. Substrat transparent selon l'une quelconque des revendications précédentes, **caractérisé en ce qu'il** est directement revêtu d'une couche à base de Si₃N₄, AlN ou à base d'un mélange des deux.

10. Substrat transparent selon l'une quelconque des revendications précédentes, **caractérisé en ce que** dans un motif fonctionnel au moins, et de préférence dans chaque motif fonctionnel, une couche métallique absorbante supérieure, de préférence à base de Ti, est située entre la couche fonctionnelle à base d'argent et au moins une couche diélectrique supérieure.

11. Substrat transparent selon l'une quelconque des revendications précédentes, **caractérisé en ce que** les épaisseurs des couches constitutives dudit motif pour l'empilement tri-couches sont :
ZnO / Ag /...ZnO / Si₃N₄ et de préférence : ZnO/Ag/Ti/ZnO/Si₃N₄
5 à 15/10 à 17/...5 à 15/25 à 65 nm... 5 à 15/10 à 17/0,2 à 3/5 à 15/25 à 65 nm.

12. Substrat transparent selon l'une quelconque des revendications 1 à 10, **caractérisé en ce que** les épaisseurs des couches constitutives dudit motif pour l'empilement quadri-couches sont :
ZnO / Ag /...ZnO / Si₃N₄ et de préférence : ZnO/Ag/Ti/ZnO/Si₃N₄
5 à 15/7 à 15/...5 à 15/23 à 65 nm... 5 à 15/7 à 15/0,2 à 3/5 à 15/23 à 65 nm.

13. Procédé de fabrication d'un substrat transparent, notamment en verre, muni d'un empilement de couches minces comportant une pluralité de couches fonctionnelles, **caractérisé en ce qu'au** moins trois couches fonctionnelles à base d'argent sont déposées sur ledit substrat et au moins trois motifs identiques de couches fonctionnelles sont déposés sur ledit substrat, chaque couche fonctionnelle étant associée dans chaque motif fonctionnel à au moins une couche sous-jacente et/ou sus-jacente, chaque motif fonctionnel déposé présentant la structure suivante : ZnO/Ag/...ZnO/Si₃N₄, **en ce que** ledit empilement présente une résistance R_{□} < 1,5 Ω par carré **et en ce que** ledit substrat peut subir au moins une opération de transformation impliquant un traitement thermique à une température d'au moins 500°C.

14. Procédé selon la revendication 13, **caractérisé en ce qu'**au moins quatre couches fonctionnelles à base d'argent sont déposées sur ledit substrat.

15. Procédé selon la revendication 13 ou la revendication 14, **caractérisé en ce que** l'épaisseur totale des couches fonctionnelles à base d'argent déposées est supérieure ou égale à 25 nm et est de préférence comprise entre 35 et 50 nm lorsque l'empilement comprend trois couches fonctionnelles et entre 28 et 64 nm lorsque l'empilement comprend au moins quatre couches fonctionnelles.

16. Procédé selon l'une quelconque des revendications 13 à 15, **caractérisé en ce que** pour au moins une couche fonctionnelle, et de préférence chaque couche fonctionnelle, au moins une couche diélectrique inférieure est déposée sous ladite couche fonctionnelle et une couche diélectrique supérieure est déposée sur ladite couche fonctionnelle, lesdites couches diélectriques étant, de préférence, à base de ZnO, éventuellement dopé à l'aluminium.

17. Procédé selon l'une quelconque des revendications 13 à 16, **caractérisé en ce qu'**une couche supérieure à base de Si₃N₄, AlN ou à base d'un mélange des deux est déposée au-dessus d'au moins une couche fonctionnelle, et de préférence au-dessus de chaque couche fonctionnelle.

18. Procédé selon l'une quelconque des revendications 13 à 17, **caractérisé en ce que** ledit substrat est directement revêtu d'une couche à base de Si₃N₄, AlN ou à base d'un mélange des deux.

19. Procédé selon l'une quelconque des revendications 13 à 18, **caractérisé en ce que** dans un motif fonctionnel au moins, et de préférence dans chaque motif fonctionnel, une couche métallique absorbante supérieure, de préférence à base de Ti, est déposée au-dessus de la couche fonctionnelle à base d'argent et au-dessous d'au moins une couche diélectrique supérieure.

20. Procédé selon l'une quelconque des revendications 13 à 19, **caractérisé en ce que** les épaisseurs des couches constitutives dudit motif pour l'empilement tri-couches sont :
ZnO / Ag /... ZnO / Si₃N₄ et de préférence : ZnO/Ag/Ti/ZnO/Si₃N₄
5 à 15/10 à 17/...5 à 15/25 à 65 nm... 5 à 15/10 à 17/0,2 à 3/5 à 15/25 à 65 nm.

21. Procédé selon l'une quelconque des revendications 13 à 19, **caractérisé en ce que** les épaisseurs des couches constitutives dudit motif pour l'empilement quadri-couches sont :
ZnO / Ag /...ZnO / Si₃N₄ et de préférence : ZnO/Ag/Ti/ZnO/Si₃N₄
5 à 15/7 à 15/... 5 à 15/23 à 65 nm... 5 à 15/7 à 15/0,2 à 3/5 à 15/23 à 65 nm.

22. Procédé selon l'une quelconque des revendications 13 à 21, **caractérisé en ce que** le dépôt des motifs fonctionnels est opéré en passant plusieurs fois ledit substrat dans un dispositif unique de fabrication.

23. Procédé selon la revendication précédente, **caractérisé en ce que** lorsque ledit empilement comporte quatre couches fonctionnelles à base d'argent, le dépôt des motifs est opéré par paire en passant deux fois ledit substrat dans un dispositif unique de fabrication.

24. Procédé selon la revendication précédente, **caractérisé en ce que** les épaisseurs des couches déposées sont sensiblement identiques lors de chacun des deux passages.

25. Procédé selon l'une quelconque des revendications 13 à 24, **caractérisé en ce que** lorsque ledit substrat subit une opération de transformation impliquant un traitement thermique à une température d'au moins 500°C sa résistance R_{□} est diminuée d'au moins 10 %, voire d'au moins 15 %.

26. Vitrage de contrôle thermique et/ou de blindage électromagnétique et/ou chauffant incorporant au moins un substrat selon l'une quelconque des revendications 1 à 12.

27. Utilisation du substrat selon l'une quelconque des revendications 1 à 12, pour réaliser alternativement ou cumulativement du contrôle thermique et/ou du blindage électromagnétique et/ou du vitrage chauffant.

## Patentansprüche

1. Transparentes Substrat, insbesondere aus Glas, mit einem Dünnschichtaufbau beschichtet, umfassend eine Vielzahl von Funktionsschichten, **dadurch gekennzeichnet, dass** der Dünnschichtaufbau mindestens drei Funktionsschichten auf Basis von Silber umfasst und mindestens drei identische Muster von Funktionsschichten umfasst, wobei jede Funktionsschicht in jedem Funktionsmuster mit mindestens einer darunter- und/oder darüberliegenden Schicht verbunden ist, wobei jedes Funktionsmuster folgende Struktur aufweist: ZnO/Ag/...ZnO/Si₃N₄, **wobei** der Schichtaufbau einen Widerstand R_{□}< 1,5 Ω pro Quadrat aufweist **und wobei** das Substrat mindestens einen Verarbeitungsprozess durchlaufen kann, der eine Wärmebehandlung bei einer Temperatur von mindestens 500 °C beinhaltet.

2. Transparentes Substrat nach Anspruch 1, **dadurch gekennzeichnet, dass** es eine Lichtdurchlässigkeit T_{L}≥ 70 % aufweist.

3. Transparentes Substrat nach Anspruch 1, **dadurch gekennzeichnet, dass** es eine Lichtdurchlässigkeit T_{L} ≥ 40 % **aufweist und dass,** wenn es mit mindestens einem weiteren Substrat verbunden ist, um eine Verglasung zu bilden, diese Verglasung eine Selektivität von ≥ 2 aufweist.

4. Transparentes Substrat nach Anspruch 1, **dadurch gekennzeichnet, dass** es eine Lichtdurchlässigkeit T_{L} ≥ 40 % und einen Widerstand R_{□} ≤ 1,1 Ω pro Quadrat aufweist.

5. Transparentes Substrat nach einem der vorhergehenden Ansprüche, **dadurch gekennzeichnet, dass** es mindestens vier Funktionsschichten auf Basis von Silber umfasst.

6. Transparentes Substrat nach einem der vorhergehenden Ansprüche, **dadurch gekennzeichnet, dass** die Gesamtdicke der Funktionsschichten auf Basis von Silber höher als oder gleich 25 nm ist und vorzugsweise zwischen 35 und 50 nm liegt, wenn der Schichtaufbau drei Funktionsschichten umfasst, und zwischen 28 und 64 nm, wenn der Schichtaufbau mindestens vier Funktionsschichten umfasst.

7. Transparentes Substrat nach einem der vorhergehenden Ansprüche, **dadurch gekennzeichnet, dass** sich mindestens eine Funktionsschicht und vorzugsweise jede Funktionsschicht mindestens zwischen einer unteren dielektrischen Schicht und einer oberen dielektrischen Schicht befindet, wobei die dielektrischen Schichten vorzugsweise auf Basis von möglicherweise mit Aluminium dotiertem ZnO sind.

8. Transparentes Substrat nach einem der vorhergehenden Ansprüche, **dadurch gekennzeichnet, dass** mindestens eine Funktionsschicht und vorzugsweise jede Funktionsschicht eine obere Schicht auf Basis von Si₃N₄, AlN oder auf Basis einer Mischung von beiden umfasst.

9. Transparentes Substrat nach einem der vorhergehenden Ansprüche, **dadurch gekennzeichnet, dass** es mit einer Schicht auf Basis von Si₃N₄, AlN oder auf Basis einer Mischung von beiden direkt beschichtet ist.

10. Transparentes Substrat nach einem der vorhergehenden Ansprüche, **dadurch gekennzeichnet, dass** sich in einem Funktionsmuster und vorzugsweise in jedem Funktionsmuster mindestens eine absorbierende obere Metallschicht, vorzugsweise auf Basis von Ti, zwischen der Funktionsschicht auf Basis von Silber und mindestens einer oberen dielektrischen Schicht befindet.

11. Transparentes Substrat nach einem der vorhergehenden Ansprüche, **dadurch gekennzeichnet, dass** die Dicken der Schichten, aus denen das Muster besteht, für den dreilagigen Schichtaufbau wie folgt sind:
ZnO / Ag /...ZnO / Si₃N₄ und vorzugsweise: ZnO/Ag/Ti/ZnO/Si₃N₄
5 bis 15/10 bis 17/...5 bis 15/25 bis 65 nm... 5 bis 15/10 bis 17/0,2 bis 3/5 bis 15/25 bis 65 nm.

12. Transparentes Substrat nach einem der Ansprüche 1 bis 10, **dadurch gekennzeichnet, dass** die Dicken der Schichten, aus denen das Muster besteht, für den vierlagigen Schichtaufbau wie folgt sind:
ZnO / Ag /...ZnO / Si₃N₄ und vorzugsweise: ZnO/Ag/Ti/ZnO/Si₃N₄
5 bis 15/7 bis 15/...5 bis 15/23 bis 65 nm... 5 bis 15/7 bis 15/0,2 bis 3/5 bis 15/23 bis 65 nm.

13. Verfahren zur Herstellung eines transparenten Substrats, insbesondere aus Glas, mit einem Dünnschichtaufbau beschichtet, umfassend eine Vielzahl von Funktionsschichten, **dadurch gekennzeichnet, dass** mindestens drei Funktionsschichten auf Basis von Silber auf dem Substrat aufgebracht sind und mindestens drei identische Muster von Funktionsschichten auf dem Substrat aufgebracht sind, wobei jede Funktionsschicht in jedem Funktionsmuster mit mindestens einer darunter- und/oder darüberliegenden Schicht verbunden ist, wobei jedes Funktionsmuster folgende Struktur aufweist: ZnO/Ag/...ZnO/Si₃N₄, **wobei** der Schichtaufbau einen Widerstand R_{□} < 1,5 Ω pro Quadrat aufweist **und wobei** das Substrat mindestens einen Verarbeitungsprozess durchlaufen kann, der eine Wärmebehandlung bei einer Temperatur von mindestens 500 °C beinhaltet.

14. Verfahren nach Anspruch 13, **dadurch gekennzeichnet, dass** mindestens vier Funktionsschichten auf Basis von Silber auf dem Substrat aufgebracht sind.

15. Verfahren nach Anspruch 13 oder Anspruch 14, **dadurch gekennzeichnet, dass** die Gesamtdicke der aufgebrachten Funktionsschichten auf Basis von Silber höher als oder gleich 25 nm ist und vorzugsweise zwischen 35 und 50 nm liegt, wenn der Schichtaufbau drei Funktionsschichten umfasst, und zwischen 28 und 64 nm, wenn der Schichtaufbau mindestens vier Funktionsschichten umfasst.

16. Verfahren nach einem der Ansprüche 13 bis 15, **dadurch gekennzeichnet, dass** für mindestens eine Funktionsschicht und vorzugsweise jede Funktionsschicht mindestens eine untere dielektrische Schicht unter der Funktionsschicht aufgebracht ist und eine obere dielektrische Schicht auf die Funktionsschicht aufgebracht ist, wobei die dielektrischen Schichten vorzugsweise auf Basis von möglicherweise mit Aluminium dotiertem ZnO sind.

17. Verfahren nach einem der Ansprüche 13 bis 16, **dadurch gekennzeichnet, dass** eine obere Schicht auf Basis von Si₃N₄, AlN oder auf Basis einer Mischung von beiden über mindestens einer Funktionsschicht und vorzugsweise über jeder Funktionsschicht aufgebracht ist.

18. Verfahren nach einem der Ansprüche 13 bis 17, **dadurch gekennzeichnet, dass** das Substrat mit einer Schicht auf Basis von Si₃N₄, AlN oder auf Basis einer Mischung von beiden direkt beschichtet ist.

19. Verfahren nach einem der Ansprüche 13 bis 18, **dadurch gekennzeichnet, dass** in einem Funktionsmuster und vorzugsweise in jedem Funktionsmuster mindestens eine absorbierende obere Metallschicht, vorzugsweise auf Basis von Ti, über der Funktionsschicht auf Basis von Silber und unter mindestens einer oberen dielektrischen Schicht aufgebracht ist.

20. Verfahren nach einem der Ansprüche 13 bis 19, **dadurch gekennzeichnet, dass** die Dicken der Schichten, aus denen das Muster besteht, für den dreilagigen Schichtaufbau wie folgt sind:
ZnO / Ag /.. ZnO / Si₃N₄ und vorzugsweise: ZnO/Ag/Ti/ZnO/Si₃N₄
5 bis 15/10 bis 17/...5 bis 15/25 bis 65 nm... 5 bis 15/10 bis 17/0,2 bis 3/5 bis 15/25 bis 65 nm.

21. Verfahren nach einem der Ansprüche 13 bis 19, **dadurch gekennzeichnet, dass** die Dicken der Schichten, aus denen das Muster besteht, für den vierlagigen Schichtaufbau wie folgt sind:
ZnO / Ag /...ZnO / Si₃N₄ und vorzugsweise: ZnO/Ag/Ti/ZnO/Si₃N₄
5 bis 15/7 bis 15/... 5 bis 15/23 bis 65 nm... 5 bis 15/7 bis 15/0,2 bis 3/5 bis 15/23 bis 65 nm.

22. Verfahren nach einem der Ansprüche 13 bis 21, **dadurch gekennzeichnet, dass** das Aufbringen der Funktionsmuster erfolgt, indem das Substrat mehrere Male in eine einzigartige Herstellungsvorrichtung gegeben wird.

23. Verfahren nach dem vorhergehenden Anspruch, **dadurch gekennzeichnet, dass** wenn der Schichtaufbau vier Funktionsschichten auf Basis von Silber umfasst, das Aufbringen der Muster paarweise erfolgt, indem das Substrat zweimal in eine einzigartige Herstellungsvorrichtung gegeben wird.

24. Verfahren nach dem vorhergehenden Anspruch, **dadurch gekennzeichnet, dass** die Dicken der aufgebrachten Schichten im Wesentlichen bei jedem der zwei Durchgänge identisch sind.

25. Verfahren nach einem der Ansprüche 13 bis 24, **dadurch gekennzeichnet, dass** wenn das Substrat einen Verarbeitungsprozess durchläuft, der eine Wärmebehandlung bei einer Temperatur von mindestens 500 °C beinhaltet, sein Widerstand R_{□} sich um mindestens 10 % beziehungsweise mindestens 15 % verringert.

26. Wärmeschutzverglasung und/oder elektromagnetische Abschirmverglasung und/oder beheizbare Verglasung, die mindestens ein Substrat nach einem der Ansprüche 1 bis 12 enthält.

27. Verwendung des Substrats nach einem der Ansprüche 1 bis 12 zur alternativen oder kumulativen Ausführung von Wärmeschutz und/oder elektromagnetischer Abschirmung und/oder beheizbarer Verglasung.

## Claims

1. A transparent substrate, especially made of glass, provided with a thin-film stack comprising a plurality of functional layers, **characterized in that** said thin-film stack comprises at least three silver-based functional layers and comprises at least three identical features of functional layers, each functional layer being associated in each functional feature with at least one subjacent and/or superjacent layer, each functional feature having the following structure: ZnO/Ag/...ZnO/Si₃N₄, **in that** said stack has a resistance R < 1.5 Ω per square and **in that** said substrate may undergo at least one transformation operation involving a heat treatment at a temperature of at least 500°C.

2. The transparent substrate as claimed in claim 1, **characterized in that** it has a light transmission T_{L} ≥ 70 %.

3. The transparent substrate as claimed in claim 1, **characterized in that** it has a light transmission T_{L} ≥ 40% and **in that** when it is associated with at least one other substrate to form a glazing assembly, this glazing assembly has a selectivity ≥ 2.

4. The transparent substrate as claimed in claim 1, **characterized in that** it has a light transmission T_{L} ≥ 40% and a resistance R ≤ 1.1 Ω per square.

5. The transparent substrate as claimed in any one of the preceding claims, **characterized in that** it comprises at least four silver-based functional layers.

6. The transparent substrate as claimed in any one of the preceding claims, **characterized in that** the total thickness of the silver-based functional layers is greater than or equal to 25 nm and is preferably between 35 and 50 nm when the stack comprises three functional layers and between 28 and 64 nm when the stack comprises at least four functional layers.

7. The transparent substrate as claimed in any one of the preceding claims, **characterized in that** at least one functional layer, and preferably each functional layer, is located between at least one lower dielectric layer and one upper dielectric layer, said dielectric layers preferably being based on ZnO, optionally doped with aluminum.

8. The transparent substrate as claimed in any one of the preceding claims, **characterized in that** at least one functional layer, and preferably each functional layer, comprises an upper layer based on Si₃N₄, AlN or based on a mixture of the two.

9. The transparent substrate as claimed in any one of the preceding claims, **characterized in that** it is directly coated with a layer based on Si₃N₄, AlN or based on a mixture of the two.

10. The transparent substrate as claimed in any one of the preceding claims, **characterized in that**, in at least one functional feature, and preferably in each functional feature, an upper absorbent metal layer, preferably based on Ti, is located between the silver-based functional layer and at least one upper dielectric layer.

11. The transparent substrate as claimed in any one of the preceding claims, **characterized in that** the thicknesses of the constituent layers of said feature in the case of the three-layer stack are:
ZnO/Ag/...ZnO/Si₃N₄ and preferably ZnO/Ag/Ti/ZnO/Si₃N₄
5 to 15/10 to 17/...5 to 15/25 to 65 nm and preferably 5 to 15/10 to 17/0.2 to 3/5 to 15/25 to 65 nm.

12. The transparent substrate as claimed in any one of claim 1 to 10, **characterized in that** the thicknesses of the constituent layers of said feature in the case of the four-layer stack are:
ZnO/Ag/...ZnO/Si₃N₄ and preferably ZnO/Ag/Ti/ZnO/Si₃N₄
5 to 15/7 to 15/...5 to 15/23 to 65 nm and preferably 5 to 15/7 to 15/0.2 to 3/5 to 15/23 to 65 nm.

13. A process for manufacturing a transparent substrate, especially made of glass, provided with a thin-film stack comprising a plurality of functional layers, **characterized in that** at least three silver-based functional layers are deposited on said substrate and at least three identical features of functional layers are deposited on said substrate, each functional layer being associated in each functional feature with at least one subjacent and/or superjacent layer, each functional feature having the following structure: ZnO/Ag/...ZnO/Si₃N₄, **in that** said stack has a resistance R < 1.5 Ω per square and **in that** said substrate may undergo at least one transformation operation involving a heat treatment at a temperature of at least 500°C.

14. The process as claimed in claim 13, **characterized in that** at least four silver-based functional layers are deposited on said substrate.

15. The process as claimed in claim 13 or claim 14, **characterized in that** the total thickness of the silver-based functional layers deposited is greater than or equal to 25 nm and is preferably between 35 and 50 nm when the stack comprises three functional layers and between 28 and 64 nm when the stack comprises at least four functional layers.

16. The process as claimed in any one of claims 13 to 15, **characterized in that**, for at least one functional layer, and preferably for each functional layer, at least one lower dielectric layer is deposited beneath said functional layer and an upper dielectric layer is deposited on said functional layer, said dielectric layers being preferably based on ZnO, optionally doped with aluminum.

17. The process as claimed in any one of claims 13 to 16, **characterized in that** an upper layer based on Si₃N₄, AlN or based on a mixture of the two is deposited on top of at least one functional layer, and preferably on top of each functional layer.

18. The process as claimed in any one of claims 13 to 17, **characterized in that** said substrate is directly coated with a layer based on Si₃N₄, AlN or based on a mixture of the two.

19. The process as claimed in any one of claims 13 to 18, **characterized in that**, in at least one functional feature, and preferably in each functional feature, an upper absorbent metal layer, preferably based on Ti, is deposited on top of the silver-based functional layer and beneath at least one upper dielectric layer.

20. The process as claimed in any one of claims 13 to 19, **characterized in that** the thicknesses of the constituent layers of said feature in the case of the three-layer stack are:
ZnO/Ag/...ZnO/Si₃N₄ and preferably ZnO/Ag/Ti/ZnO/Si₃N₄
5 to 15/10 to 17/... 5 to 15/25 to 65 nm and preferably 5 to 15/10 to 17/0.2 to 3/5 to 15/25 to 65 nm.

21. The process as claimed in any one of claims 13 to 19, **characterized in that** the thicknesses of the constituent layers of said feature in the case of the four-layer stack are:
ZnO/Ag/...ZnO/Si₃N₄ and preferably ZnO/Ag/Ti/ZnO/Si₃N₄
5 to 15/7 to 15/ ...5 to 15/23 to 65 nm and preferably 5 to 15/7 to 1510.2 to 3/5 to 15/23 to 65 nm.

22. The process as claimed in any one of claims 13 to 21 **characterized in that** the functional features are deposited by passing said substrate several times through a single manufacturing device.

23. The process as claimed in the preceding claim, **characterized in that** when said stack comprises four silver-based functional layers, the features are deposited in pairs, by passing said substrate twice through a single manufacturing device.

24. The process as claimed in the preceding claim, **characterized in that** the thicknesses of the deposited layers are substantially identical during each of the two passes.

25. The process as claimed in any one of claims 13 to 24, **characterized in that** when said substrate undergoes a transformation operation involving a heat treatment at a temperature of at least 500°C, its resistance R is reduced by at least 10%, or even at least 15%.

26. Glazing for thermal control and/or electromagnetic shielding and/or heating, which incorporates at least one substrate as claimed in any one of claims 1 to 12.

27. The use of the substrate as claimed in any one of claims 1 to 12, for producing, alternatively or cumulatively, thermal control and/or electromagnetic shielding and/or heating.
